# EUROPÄISCHE PATENTSCHRIFT

(11) **EP 2 646 287 B1**
(45) Veröffentlichungstag und Bekanntmachung des Hinweises auf die Patenterteilung: **21.06.2017**
(21) Anmeldenummer: 11808162.9
(22) Anmeldetag: 01.12.2011
(51) Int. Cl.: B60R 13/02, B32B 5/14, B32B 27/12, B32B 27/40, D06N 3/00, D06N 3/14, B32B 27/06, B32B 27/28, B32B 5/24

(54) **VERBUNDMATERIAL**
LAMINATE MATERIAL
MATERIAU STRATIFIE

(30) Priorität: 02.12.2010 AT 7422010 U; 07.04.2011 DE 202011004994 U
(43) Veröffentlichungstag der Anmeldung: 09.10.2013
(73) Patentinhaber: Konrad Hornschuch AG, 74679 Weissbach (DE)
(72) Erfinder: SCHAEFER, Philipp, 30175 Hannover (DE)
(74) Vertreter: Wagner Albiger & Partner Patentanwälte mbB
(86) Internationale Anmeldenummer: PCT/EP2011/006028
(87) Internationale Veröffentlichungsnummer: WO 2012/072257

(56) Entgegenhaltungen:
- EP-A2- 0 949 066
- WO-A1-2010/139710
- WO-A2-2009/049728
- DE-U1-202010 009 073
- Harald F. Krug ET AL: "Nanopartikel", RÖMPP Online, Version 3.37, 1 June 2011 (2011-06-01), pages 1-5, XP055092623, Retrieved from the Internet: URL:https://roempp.thieme.de/roempp4.0/do/ data/RD-14-02250 [retrieved on 2013-12-10]

## Beschreibung

Die Erfindung betrifft ein Verbundmaterial gemäß dem Oberbegriff des Patentanspruches 1. Derartige Verbundmaterialien werden in Form von flexiblen Zuschnitten oder flächigen oder platten- oder bahnenförmigen Formteilen erstellt.

Verbundmaterialien sind in der Regel mehrschichtig aufgebaut und besitzen auf ihrer Oberfläche eine mit einer Polyurethandispersion gebildete Oberschicht, die über Kleberschichten und/oder Zwischenschichten mit einer Trägerschicht, z.B. aus Leder oder Textilien, verbunden ist.

Das DE-GM 20 2004019330 U1 beschreibt eine mittels einer Silikonmatrize oberflächenstrukturierte Beschichtung, die aus Polyurethandispersion gebildet ist. Die Beschichtung befindet sich auf einem durch Schleifen aufgerauten Leder oder auf einem aufgerauten textilen Träger.

Ferner offenbart die WO 2010/139710 A1 einen ohne Naturleder auskommenden Dachhimmel.

Ziel der Erfindung ist es, ein Verbundmaterial insbesondere dahingehend auszubilden, dass dieses Verbundmaterial sehr geringes Gewicht besitzt und schall- und wärmeisolierend und druckelastisch ist. Des Weiteren sollen aus derartigen Verbundmaterialien gefertigte Gegenstände eine angenehme Haptik, gutes Aussehen und im Griff und im Gebrauch, insbesondere für Autohimmel Innenwandverkleidungen, vor allem für Autos, höchsten Komfort gewährleisten. Ferner gehört es zur Aufgabe, ein Verbundmaterial zu schaffen, das sowohl bei seiner Herstellung aber auch im Gebrauch über eine günstige CO₂-Bilanz verfügt.

Zur Aufgabe gehört auch die Vermeidung einer Kondenswasserbildung zwischen dem metallischen Autodach und dem Autohimmel, verursacht durch Klimawechsel und Feuchtigkeit.

Aufgabe ist es auch, dass der leichte voluminöse Träger nicht zu einer Schichtentrennung neigt, und jede beliebig aussehende Oberfläche, vor allem wie Narbenleder, Nubukleder, technische Gewebe, wie z.B. solche aus Kohlenstofffasern, oder eine Feinstruktur wie ein hochwertiges Gewebe, z.B. ein Seidengewebe, aufweist oder ein durch Lasern erzeugtes Fantasiemuster aufweist.

Zur Aufgabe gehört es auch, dass sich das Verbundmaterial leicht und umweltfreundlich, d.h. ohne hohen CO₂ Ausstoß rezyklieren lässt, im Gegensatz zu Leder oder schweren Lederimitationen.

Erfindungsgemäß werden diese Aufgaben durch Ausgestaltung eines Verbundmaterials nach den Merkmalen des Patentanspruches 1 gelöst.

Vorteilhafterweise wird der Schaum durch Schälen oder Spalten aus einem Schaumblock gebildet, sodass der Schaum bzw. die erhaltene Schaumbahn auf beiden Seiten keine geschlossene Haut aufweist, wie sie bei der Herstellung eines Schaumformteiles zwangsläufig anfällt.

Ein erfindungsgemäßes Verbundmaterial zeichnet sich vor allem dadurch aus, dass es flexibel und sehr druckelastisch sowie extrem leicht ist und eine strapazierfähige, biegbare oder gut gestaltbare und ein angenehmes Aussehen besitzende, leicht strukturierbare Oberfläche besitzt.

Ein besonders leichtes und flexibles bzw. druckelastisches Verbundmaterial erhält man, wenn vorgesehen ist, dass der Anteil an offenen Zellen im Polyurethanschaum der Trägerschicht größer als 90 % ist. Dieses Material ist auch entsprechend luftdurchlässig und wasserdampfdurchlässig. Von Vorteil ist es, wenn es sich um einen Schäl- oder Spaltschaum handelt und wenn das Gewicht des als Trägerschicht eingesetzten Polyurethanschaumes 15 bis 110 kg/m³, vorzugsweise 30 bis 85 kg/m³, beträgt. Je nach dem gewünschten Einsatzzweck kann das Gewicht des eingesetzten Polyurethanschaums variiert werden, der Schaum selbst gehört zur Gruppe der Polyurethanweichschäume, er kann aus Polyester oder aus Polyäther erstellt sein.

Zur Verbindung der Oberschicht mit der Trägerschicht kann je nach Einsatzzweck und gewünschten Eigenschaften vorgesehen sein, dass zur Verbindung von Oberschicht und Trägerschicht zwischen der Oberschicht und der Trägerschicht als Kleberschicht eine Zwischenschicht oder eine Doppelschicht bzw. ein Verbund einer Zwischenschicht mit einer zwischen der Trägerschicht und der Zwischenschicht liegenden Bindeschicht vorgesehen ist.

Insbesondere bei leichten Polyurethanschäumen kann es zu Verstärkungszwecken vorteilhaft sein, wenn in die Kleberschicht ein dünnes leichtgewichtiges Netz, Gewirke oder Vlies eingelegt oder eingebettet ist, und/oder das Gewirke oder Netz oder Vlies auf der Oberfläche der Trägerschicht an- oder aufliegt und/oder an die Oberfläche der Trägerschicht, vorzugsweise durch Flammkaschieren, angebunden ist. Es ergeben sich allgemein gute Gewichts- und Festigkeitsverhältnisse, wenn das Flächengewicht des Gewirkes oder Netzes oder Vlies 15 bis 120 g/m², vorzugsweise 30 bis 80 g/m², beträgt und/oder wenn die Abstände zwischen den Fäden oder Garnen des Netzes oder Gewirkes oder Vlieses oder die längsten Abmessungen der zwischen den Fäden oder Garnen liegenden Hohlräume oder Maschen 0,02 bis 2,5 mm, vorzugsweise 0,05 bis 1,5 betragen. Die Gewirke oder Netze oder Vliese können mit Fäden oder Garnen aus Polyester oder Polyamid erstellt sein und auch Baumwollefasern enthalten.

Gute Festigkeits- und Elastizitätseigenschaften ergeben sich, wenn die Zwischenschicht oder die Bindeschicht, gegebenenfalls ein eingelegtes oder an die Trägerschicht angebundenes Gewirke oder Netz oder Vlies zumindest stellenweise durchdringend, 0,02 bis 0,8 mm, vorzugsweise 0,05 bis 0,5 mm, in den offenzelligen Polyurethanschaum der Trägerschicht eingebracht oder eingedrungen ist.

Je nach Anwendungszweck kann es vorteilhaft sein, wenn die Dicke der Trägerschicht 1,0 bis 5 mm, vorzugsweise 1,5 bis 3,5 mm, beträgt.

Ein zweckmäßiger und fester Aufbau mit einer sehr guten Druckelastizität und einer optimalen Oberflächengestaltung ergibt sich, wenn die Oberschicht mit einer eine verfestigte Polyurethandispersion enthaltenden oder von dieser gebildeten Kleberschicht direkt also ohne Einlage eines Gewirke, Netz oder Vlies an die Trägerschicht angebunden bzw. angeklebt ist.

Einen strapazierbaren und bezüglich seiner Eigenschaften einstellbaren Aufbau der Oberschicht und sehr gute Abreibeigenschaften werden erreicht, wenn die Oberschicht aus einer Polyurethandispersion gebildet ist, die auch ohne Vernetzer über elastomere oder thermoelastische Eigenschaften verfügt, und wenn sie mehr als 4 Gew.-% nicht emigrierbares Polysiloxan enthält und/oder wenn die Polyurethandispersion eine verzweigte Struktur aufweist, und/oder wenn das Verbundmaterial mit zwei untrennbar miteinander verbundenen Schichten aufgebaut ist und eine außen gelegene, oberflächlich strukturierte, verfestigte Polyurethandispersion enthaltende Oberschicht und eine darunter liegende, vorzugsweise eine weiche vor ihrer Vernetzung ausgeprägte thermoplastische Eigenschaften aufweisende, vorzugsweise eine lineare Struktur besitzende, Zwischenschicht umfasst.

Durch die Ausbildung der Oberschicht mit zwei miteinander verbundenen Schichten ist es einfach möglich, die oberflächlich gelegene Schicht mit einem Muster zu versehen, das in einer Matrize, z.B. einer Matrize aus Silikonkautschuk oder in beschichtetem Papier, vorgegeben ist, und diese gemusterte Schicht an die Trägerschicht anzubinden. Die Zwischenschicht dient dazu, um die Oberschicht mit der Bindeschicht oder direkt mit der Trägerschicht fest und untrennbar zu verbinden.

Von Vorteil ist es, wenn vorgesehen ist, dass die Oberschicht eine Stärke von 0,04 bis 0,14 mm, vorzugsweise von 0,08 bis 0,11 mm, aufweist und/oder wenn die Zwischenschicht eine Stärke von 0,04 bis 0,11 mm, vorzugsweise von 0,06 bis 0,08 mm, aufweist. Mit diesen Vorgaben erhält man ein elastisches, dehnbares Verbundmaterial, dessen Oberfläche auch bei Biegebeanspruchungen bzw. Dehnungen um mehr als 40% unversehrt bleibt.

Die Oberschicht kann auf einer direkt oder indirekt erstellten Matrize bzw. Unterlage ausgebildet werden, insbesondere einer Silikonkautschukmatrix, die durch Abformen einer gewünschten Oberfläche z.B. eines Kohlenstoffgewebes, eines Narbenleders oder durch Lasern eine entsprechende Oberflächengestaltung erhalten hat, die auf die Oberfläche der Oberschicht übertragen wird.

Bei der Herstellung des Verbundmaterials wird derart vorgegangen, dass auf eine oberflächenstrukturierte, erwärmte oder heiße Matrize oder ein beschichtetes Papier eine eine wässrige Polyurethandispersion enthaltende Oberschicht aufgetragen wird, dass auf diese Oberschicht nach ihrem Antrocknen oder Trocknen eine Zwischenschicht aufgebracht wird, und dass auf die noch feuchte Zwischenschicht direkt die Trägerschicht oder die mit der Bindeschicht, gegebenenfalls mit einer in der Bindeschicht eingebetteten oder auf die Trägerschicht angebundenen Lage eines Netzes oder Gewirkes oder Vlieses, versehene Trägerschicht aufgebracht wird, wobei die Zwischenschicht oder die Bindeschicht sich jeweils noch im feuchten Zustand befindet und dass die übereinanderliegenden Schichten durch Aneinanderdrücken zu dem platten- oder bahnenförmigen Verbundmaterial verbunden werden.

Um eine gute Verbindung der Oberschicht und der Zwischenschicht zu erreichen, kann vorgesehen sein, dass die Oberschicht auf der erwärmten Matrize oder dem erwärmten, strukturierten Papier ausgebildet und trocknen bzw. antrocknen gelassen wird. Auf diese noch nicht vernetzte aber bereits getrocknete Oberschicht kann die Zwischenschicht aufgebracht werden. Auf die noch leicht feuchte Zwischenschicht wird sodann die Trägerschicht direkt oder die mit der Bindeschicht versehene Trägerschicht im noch feuchten Zustand der Bindeschicht aufgebracht und mittels einer Rolle angedrückt.

Wenn kein Gewirke, Netz oder Vlies vorgesehen ist, kann die Trägerschicht ohne vorherigem Klebstoffauftrag auf diese direkt in bzw. auf die nasse Zwischenschicht gelegt und mit einer Rolle leicht angedrückt werden, damit der Klebstoff kontrolliert in die Oberfläche der Trägerschicht eindringt.

Es wird damit eine feste Verbindung der einzelnen Schichten erreicht, wobei die Oberschicht an ihrer Oberfläche ein entsprechendes Aussehen durch die entsprechende Ausbildung der Matrizenfläche erhält.

Es ist zweckmäßig und von Vorteil, wenn in der Oberschicht und der die Zwischenschicht und in der Bindeschicht Vernetzer enthalten und die Oberschicht mit der Zwischenschicht und/oder die Zwischenschicht mit der Bindeschicht durch Aneinanderfügen in noch feuchtem Zustand miteinander quervernetzt sind und/oder wenn in der Oberschicht und/oder in der Zwischenschicht bis zu 4 Gew.-% transparente Mikrohohlkugeln aus Kunststoff enthalten sind und/oder wenn in den Polyurethandispersionen Pigmente, Vernetzer und/oder Verdicker enthalten sind und/oder wenn auf der Oberschicht feine Härchen ausgebildet sind und/oder wenn in der Oberschicht durchgehende Kapillaren ausgebildet sind und/oder wenn die Oberfläche ein Aussehen ähnlich Nubukleder oder einem geschliffenen Kunststoffmaterial mit einer feinzelligen Struktur oder einer mikrofeinen sechseckigen Wabenstruktur zeigt.

Stabile, feste, dehnbare und an die Beanspruchungen bei Verwendung angepasste Formatzuschnitte werden erhalten, wenn die verfestigte Polyurethandispersion der Oberschicht neben Pigmenten zwischen 2 und 12 Gew-% Polysiloxan enthält und vernetzt ist und/oder wenn die Polyurethandispersionen für die Zwischenschicht und die Bindeschicht in ihrer Zusammensetzung weitgehend ähnlich oder identisch sind und bis zu 55 Gew-% Polyacrylat enthalten und vernetzt sind.

Um eine entsprechende Leichtigkeit bei gleichzeitigem gutem Haftvermögen zu erreichen, wird vorteilhafterweise vorgesehen, dass die Zwischenschicht oder die Bindeschicht ein Flächengewicht von 20 bis 100 g/m², vorzugsweise 25 bis 80 g/m², aufweist und jeweils eine, gegebenenfalls Polyacrylate und/oder Kunstharze enthaltende, Schicht einer verfestigten wässerigen Polyurethandispersion ist, die jeweils vorzugsweise denselben oder einen sehr ähnlichen chemischen Aufbau besitzen.

Die Bereiche der Trägerschicht, in die die Polyurethandispersion der Kleberschicht beim Auftragen kontrolliert eingedrungen ist, besitzen erfindungsgemäß eine Dichte, welche zwischen 12% und48%, vorzugsweise zwischen 18 % und 30 %, über der Dichte der klebstofffreien Bereiche der Trägerschicht liegt.

In den offenen Zellen des Polyurethanschaumes der Trägerschicht kann sich der Polyurethandispersionsklebstoff der als Kleberschicht dienenden Zwischenschicht oder Bindeschicht gut verankern. Die Zwischen- und Hohlräume eines eingelegten Gewirkes oder Netzes oder Vlies können leicht, stellenweise oder, falls gewünscht, vollständig von der Klebstoffmasse durchdrungen werden.

Um ein erfindungsgemäßes Verbundmaterial an unterschiedliche Gebrauchsbedienungen anpassen zu können, kann vorgesehen sein, dass an die der Oberschicht abgewendete Fläche der Trägerschicht eine Basisschicht, vorzugsweise aus textilem Material, Pappe, Papier, Kunststofffolie oder einem Polyester- oder Polyamidvlies, angebunden, vorzugsweise angeklebt oder durch Flammkaschieren aufgebracht, ist.

Es kann auch vorgesehen sein, dass auf die Oberfläche der Oberschicht eine sehr dünne, hydrophobe Finish-Schicht in einer Stärke von weniger als 0,005 mm aufgebracht ist, die gegebenenfalls Nanoteilchen aus Polysiloxan oder aus Wachs oder aus Fluorpolymeren oder aus Mischungen von diesen enthält und/oder dass die Oberschicht eine eine verfestigte Polyurethandispersion enthaltende und auf einem strukturiertem Papier oder einer strukturierten Matrize oder Silikonkautschukunterlage bzw. -form gebildete und oberflächenstrukturierte Schicht ist.

Da die Trägerschicht gut biegbare und elastisch verformbar ist, kann es von Vorteil sein, diese Eigenschaften auch dem erfindungsgemäßen Verbundmaterial zu verleihen, wozu vorgesehen sein kann, dass die Oberschicht eine verfestigte Polyurethandispersion enthält, die eine Härte von zwischen 45 und 78 Shore A besitzt.

Eine hohe Widerstandsfähigkeit und Biegbarkeit des Verbundmaterials ergibt sich, wenn die Bindeschicht vor ihrer Vernetzung 50 bis 85 Gew.-% kristalline Struktur besitzendes thermoplastisches Polyurethan enthält und vernetzt ist und/oder wenn die Zwischenschicht und/oder die Bindeschicht jeweils bis zu 55 Gew.-%, vorzugsweise bis zu 25 Gew.-%, Polyacrylate enthalten und jeweils eine Härte von zwischen 22 und 50 Shore A besitzen und/oder wenn die Gesamtdicke der Oberschicht und der Zwischenschicht 0,11 bis 0,22 mm beträgt.

Die Widerstandsfähigkeit und Festigkeit der Oberschicht wird unterstützt, wenn die Oberschicht zwischen 55 und 95 Gew-%, vorzugsweise zwischen 65 und 85 Gew-%, einer verfestigten, vernetzten Polyurethandispersion enthält und gegebenenfalls eine Dichte zwischen 0,9 und 1,12 g/cm³ aufweist. Sie ist schmutzabweisend und atmungsaktiv.

Mit einem erfindungsgemäßen Verbundmaterial werden vor allem Gegenstände in Form von Kraftfahrzeuginnenwandverkleidungen, vorzugsweise Himmel, hergestellt, weil aufgrund ihres sehr geringen Gewichts bei hoher Reißfestigkeit und all den vorhandenen Komforteigenschaften weniger CO₂ anfällt als bei bekannten Materialien mit vergleichbarer Festigkeit und Stärke. Ähnliches gilt für Schuhfutter, die geringes Gewicht und hohe Festigkeit und beste Isoliereigenschaften besitzen.

Vor allem durch das bevorzugte Aufbringen der die Oberschicht ausbildenden Polyurethandispersion auf eine Matrize, kann die Oberflächengestaltung der Oberschicht durch Ausformung und Strukturierung der Matrize, insbesondere mittels Laser, nach Belieben erfolgen; es kann der Oberfläche der Oberschicht eine Vielzahl von Strukturen verliehen werden, beispielsweise können Muster, so auch Logos und Marken, auf der Oberfläche der Oberschicht ausgebildet werden.

Der Verbund der einzelnen Schichten des Verbundmaterials ist außergewöhnlich gut, sodass auch unter Lösungsmitteleinfluss, z.B. wie Benzin, keine Schichtentrennung erfolgt.

Darüber hinaus ist das erfindungsgemäße Verbundmaterial atmungsaktiv. Durch Ausbildung von durchgehenden Kapillaren in der Oberschicht können die erfindungsgemäßen Verbundmaterialien wasserdampf- und/oder luftdurchlässig gestaltet werden. Die Oberschicht kann mit durchgehenden Kapillaren gefertigt sein, welche direkt bei ihrer Herstellung ausgebildet werden, sodass die Kapillaren die Oberschicht und gegebenenfalls die Zwischenschicht durchdringen und in den offenen Zellen des Schaumes enden. Auch ein nachträgliches Anbringen von Kapillaren durch eine Mikroperforation ist möglich.

Ein erfindungsgemäßes Verbundmaterial besitzt außerordentlich gute Wärme- und Kälteisolierwirkung, die durch die Luft in dem offenzelligen Polyurethanschaum der Trägerschicht begründet wird.

Ein erfindungsgemäßes Verbundmaterial kann mit Leder verglichen werden und kann das Aussehen von echtem Narben- oder Nubukleder aufweisen, jedoch ohne die Nachteile von Leder zu besitzen, welches zu schwer und zu teuer ist, um es als

Autohimmel einsetzen zu können, da es mindestens 6 Mal schwerer ist als ein erfindungsgemäßer Autohimmel.

Im Folgenden wird die Erfindung anhand der Zeichnung näher erläutert.
Fig. 1 zeigt einen Schnitt durch ein Ausführungsbeispiel eines erfindungsgemäßen Verbundmaterials mit einer Einlage eines Gewirkes oder Netzes oder Vlies.
Fig. 2 zeigt einen Schnitt durch ein erfindungsgemäßes Verbundmaterial ohne Einlage eines Netzes oder Gewirkes.
Fig. 3 zeigt eine mögliche Ausführungsform der Erfindung.
Fig. 4 zeigt einen Detailschnitt durch die Trägerschicht, in die oberflächlich eine Polyurethandispersion integriert ist.

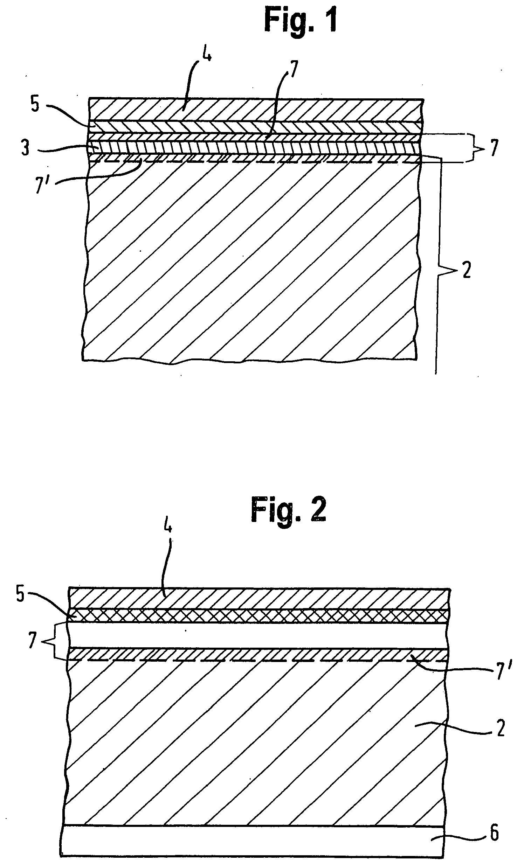

Das erfindungsgemäße Verbundmaterial umfasst gemäß Fig. 1 eine Anzahl von Schichten. Die Oberschicht 4 enthält die verfestigte wässrige Polyurethandispersion und ist mittels einer Zwischenschicht 5 verbunden, die die Verbindung der Oberschicht 4 mit einer Bindeschicht 7 darstellt. Die die Funktion einer Kleberschicht erfüllende Bindeschicht 7 ist in einen Oberflächenbereich 7' einer Trägerschicht 2 teilweise eingedrungen, wobei die Bindeschicht 7 die Verbindung zwischen der Trägerschicht 2 und der Oberschicht 4 bzw. der Zwischenschicht 5 ausbildet. Die Trägerschicht 2 wird von einem offenzelligen Polyurethanschaum gebildet. An der unteren Fläche der Trägerschicht 2 kann ein weiteres Trägermaterial 6 bzw. eine Basisschicht allenfalls zur Verbesserung der Isolation und/oder Festigkeit angebunden werden, insbesondere unter Zuhilfenahme eines eine Polyurethandispersion enthaltenden Klebers oder durch Flammkaschieren, wie in Fig. 2 dargestellt ist.

Mit 3 ist eine Lage eines Netzes, Vlies oder Gewirkes bezeichnet, das an die Oberfläche des offenzelligen Polyurethanschaums 2 angebunden sein kann und/oder in die Bindeschicht 7 eingebettet ist. Die Einlage eines derartigen Netzes oder Gewirkes oder Vlieses 3 erfolgt insbesondere dann, wenn das Gewicht des offenzelligen Polyurethanschaumes geringer ist als 45 kg/m³. Vorteilhafterweise kann das Gewicht des Polyurethanschaumes 15 bis 110 kg je m³ betragen. Bei leichtgewichtigen Schäumen dient das Netz, Vlies oder Gewirke 3 als Verstärkung.

Wie aus der Zeichnung ersichtlich ist, dringt die Kleberschicht 7 lediglich in einen schmalen Teilbereich der Trägerschicht 2 ein oder dringt überhaupt nicht in die Trägerschicht 2 ein, sondern ist lediglich an dem Netz, Vlies oder Gewirke 3 und/oder an die Oberfläche der Trägerschicht 2 angebunden. Das Ausmaß des Eindringens in die Trägerschicht 2 hängt vor allem von den Öffnungen des Netzes, Vlies oder Gewirkes 3 ab.

Um ein beschichtetes flexibles Verbundmaterial mit hoher Luftdurchlässigkeit zu schaffen, wird beispielsweise wie folgt vorgegangen:
Auf eine Silikonkautschukunterlage, deren Oberfläche im Negativ bei 40-facher Vergrößerung eine vorgegebene Struktur, z.B. die Struktur von feinzelligem, geschliffenem Gummi oder Kunststoff, zeigt, wird auf +95°C erwärmt. Auf die warme Oberfläche wird zur Ausbildung der Oberschicht 4 eine wässrige Dispersion aufgesprüht, die als Feststoffanteil 41 Gew-% Polyurethan enthält. Die Dispersion wird in einer Menge von 158g/m² aufgesprüht und bei der Wasserverdampfung entstehen feine Kapillaren. Auf diese trockene, erste, noch etwa 60°C warme Oberschicht 4 wird zur Ausbildung der Zwischenschicht 5 eine weitere wässrige Dispersion aufgesprüht, die einen Feststoffanteil von 45Gew-% bis 55Gew-% eines thermoplastischen Polyurethans enthält, und zwar in einer Menge von 110g/m². Dabei werden zwar einige sehr feine Kapillaren der Oberschicht 4 verschlossen, aber die große Mehrzahl der Kapillaren bleibt mit geringerem Durchmesser erhalten. Ferner wird auf die Oberfläche der Trägerschicht 2 bzw. und das gegebenenfalls darauf aufliegenden oder gegebenenfalls daran angebundenen Netzes, Vlies oder Gewirkes 3 als Bindeschicht 7 eine Polyurethan enthaltende, wässrige Dispersion mit gleichem oder ähnlichem Aufbau, wie sie für die Zwischenschicht 5 verwendet wurde, in einer Menge von 95g/m² in Form von feinsten Tröpfchen bzw. nebelartig aufgesprüht. Danach wird die Trägerschicht 2 mit der noch feuchten Dispersion als Bindeschicht 7 mit der Zwischenschicht 5, welche sich noch auf der Matrize befindet, zusammengebracht und in einer Rollenpresse bei einem Druck von max. 0,25 kg/cm² angedrückt und danach mittels Wärme getrocknet. Die Schichten besitzen durchgehende Kapillaren und weist eine hohe Luftdurchlässigkeit auf. Erfindungsgemäß enden die Kapillare der Oberschicht 4 und/oder der Zwischenschicht 5 in den offenen Zellen der Trägerschicht 2, die mit dem Kleber ausgekleidet sind und offen bleiben, weil die als Kleber eingesetzte Polyurethandispersion der Zwischenschicht 5 und der Bindeschicht 7 ca. 50 % Wasser enthalten, welches nach dem Trocknen die Zellen im Eindringbereich verkleinert aber nicht verschließt.

Erfindungsgemäß kann vorgesehen sein, dass ein Netz Vlies oder Gewirke 3 vor Aufbringen der Bindeschicht 7 auf die Trägerschicht 2 aufgebracht bzw. angebunden wird. Nach Aufbringen und Anbinden des Netzes, Vlies oder Gewirkes 3 wird die Bindeschicht 7 auf diesen Verbund aufgebracht, durchdringt gegebenenfalls das Netz, Vlies oder Gewirke 3 und dringt allenfalls in Oberflächenbereiche 7' der Trägerschicht 2 ein. Letztlich erhält man damit ein flexibles Verbundmaterial, bei dem auf einer von einem offenzelligen Polyurethanschaum gebildeten Trägerschicht 2 eine Lage aus einem Netz, Vlies oder Gewirke 3 aufgebracht und direkt, z.B. durch Flammkaschieren, und/oder auch mittels der Bindeschicht 7 an die Trägerschicht 2 angebunden ist.

Gemäß Fig. 1 ist auf eine Trägerschicht 2, die von einem offenzelligen Polyurethanschaum gebildet ist, eine Oberschicht 4 angebunden, die eine außen gelegene, oberflächlich strukturierte und eine verfestigte Polyurethandispersion enthaltenden Schicht darstellt und mit einer darunter liegenden, vorzugsweise eine eine lineare Struktur besitzende verfestigte Polyurethandispersion enthaltenden, Zwischenschicht 5 verbunden ist. Die Oberschicht 4 und die Zwischenschicht 5 sind fest miteinander verbunden und mit der Bindeschicht 7 an die Trägerschicht 2 angebunden. Die Bindeschicht 7 ist dabei in den offenzelligen Polyurethanschaum eingedrungen; dieser Eindringbereich ist mit 7' bezeichnet. Die Bindeschicht 7 und die Zwischenschicht 5 sind fest haftend miteinander verbunden bzw. vernetzt.

An der Unterfläche der Trägerschicht 2 kann eine Basisschicht 6 angebunden sein. Die Basisschicht 6 kann aus Papier, Pappe, Vlies, einer Klebefolie, Kunststofffolie oder anderen flächigen oder z.B. als Autohimmel vorgeformten Materialien ausgebildet werden.

Das Netz oder Gewirke 3 besitzt vorteilhafterweise ein Flächengewicht zwischen 15 und 120 g/m², vorzugsweise zwischen 30 und 80 g/m², und vorteilhafterweise eine Dicke von 0,10 bis 0,48 mm.

Fig. 2 zeigt eine Schnittansicht eines erfindungsgemäßen Verbundmaterials ohne Einlage eines Netzes, Vlies oder Gewirkes 3. Bei dieser Ausführungsform wird die Bindeschicht 7 direkt auf die Oberfläche des offenzelligen Polyurethanschaumes, der die Trägerschicht 2 darstellt, aufgetragen und wird in diesen über den schmalen Eindringbereich 7' eingelagert. Mit der Bindeschicht 7 wird die Trägerschicht 2 an die Zwischenschicht 5 fest angebunden.

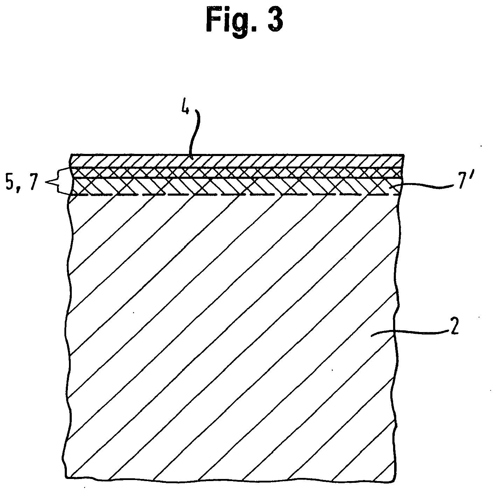

Die Oberschicht 4 zeigt eine Härte von 45 bis 78 Shore A bei einer Stärke von 0,06 bis 0,12 mm. Die Zwischenschicht 4" besitzt eine Dicke von 0,05 bis 0,9 mm bei einer Härte von 22 bis 50 Shore A. Dies gilt auch dann, wenn die Bindeschicht 7 entfällt und die Schicht 5 die Klebeschicht ist. Es ist hier wesentlich, nur eine Schicht aus Klebermaterial auszubilden. Anstelle der Bindeschicht 7 kann auch die Zwischenschicht 5 treten, wie in Fig. 3 dargestellt ist.

Die Bindeschicht 7 kann etwa 0,02 bis 0,8 mm in den offenzelligen Polyurethanschaum eindringen. Um eine gute Verbindung zwischen der Bindeschicht 7 und dem Polyurethanschaum 2 bei gleichzeitiger Leichtigkeit des Verbundmaterials zu gewährleisten, werden Polyurethanschäume eingesetzt, bei denen der Anteil an offenen Poren mehr als 90 % beträgt.

Der Polyurethanschaum kann auf Polyester- oder Polyätherbasis erstellt sein und besitzt eine Stärke von etwa 1 bis 5 mm und ist schwer entflammbar ausgebildet.

Vorteilhafterweise kann bei einem Gewicht des Polyurethanschaums von mehr als 45 kg/m³ die Kleberschicht 7 direkt auf die Schaumoberfläche ohne Zwischenlage eines Netzes Vlies oder Gewirkes 3 aufgebracht werden und dringt dann bis zu 0,8 mm in die offenen Zellen der Oberfläche des Polyurethanschaumes ein und verbindet sich chemisch und verankert sich mechanisch in den Zellen was zu einer untrennbaren Verbindung führt.

Die in die Oberfläche des Polyurethanschaums 2 eindringende Klebermasse erhöht in diesen Bereichen die Dichte um zumindest 12 %, vorzugsweise um zumindest 18 %.

Sofern in das Verbundmaterial ein Netz Vlies oder Gewirke 3 eingebracht ist, erhält das Verbundmaterial auf seiner Oberseite durch das Netz, Vlies oder Gewirke bzw. die Flammkaschierung ein höheres Gewicht bzw. eine höhere Dichte. Es kann vorgesehen sein, dass die Klebermasse der Bindeschicht 7 durch das Netz Vlies oder Gewirke 3 hindurchtritt und bei Ausfüllung der Zwischenräume des Netzes, Vlieses oder Gewirkes 3 Kontakt mit dem Polyurethanschaum hat oder auch in diesen bis zu einer gewissen vorgegebenen geringen Tiefe eindringt.

Ein zweischichtiger Aufbau gemäß Fig. 3 kommt vorzugsweise dann zur Anwendung, wenn anstelle einer Matrix ein beschichtetes Papier zur Herstellung großformatiger Verbundmaterialien eingesetzt wird.

Die Beschichtung kann also zwei- oder dreischichtig ausgeführt sein.

Wenn die auf die Trägerschicht 2 aufgebrachte Bindeschicht 7 entfällt ist die Zwischenschicht 5 entsprechend stärker, weil in diesem Falle die Dispersionsmenge, welche auf die Trägerschicht 2 aufgebracht würde, der Zwischenschicht 5 zugeschlagen wird. Die Dicke der Zwischenschicht 5 beträgt in diesem Fall 0,06 bis 0,15 mm. Die Zwischenschicht 5 bzw. die Bindeschicht 7 ist in einen Bereich 7' der Trägerschicht 2 eingedrungen.

Unabhängig davon aus wie viel Schichten das Verbundmaterial besteht, ist sie pflegeleicht, verhindert das Eindringen von trockenem und nassem Schmutz in einen Autohimmel und ist atmungsaktiv und druckelastisch und sehr leicht. 1 m² Autohimmel mit einer Stärke von 2,0 mm wiegt maximal 0,270 kg vorzugsweise weniger als 0,190 kg.

Anstelle einer Matrize kann man auch ein mit Silikon oder z.B. Polypropylen beschichtetes oberflächenstrukturiertes Papier verwenden (für größere Platten oder Bahnen Formate).

In diesem Falle ist es zweckmäßig, dass die Zwischenschicht 5 gleich als Kleberschicht fungiert, weil dann der Polyurethanschaum direkt in die noch nasse Zwischenschicht 5, die sich auf der Oberschicht 4 befindet, aufgelegt und mittels einer Rolle leicht angedrückt werden kann, und zwar bei einem Druck zwischen 0,002 und 0,25 kg cm². Durch die Menge der nassen Zwischenschicht 5 und den Druck und die Dichte der Trägerschicht 2, lässt sich die Eindringtiefe steuern, egal ob der Kleber teilweise auf die Trägerschicht 2 oder nur auf die Oberschicht 4 aufgebracht wird. In jedem Fall werden die Schichten nass oder feucht zusammen gebracht und leicht angedrückt. Danach wird das Wasser aus den Dispersionen mittels Wärme entfernt, was bei einem offenzelligen Schaum einfach ist, weil das Wasser schwammartig aufgesogen wird und über die Rückseite des offenzelligen Schaumes entweichen kann.

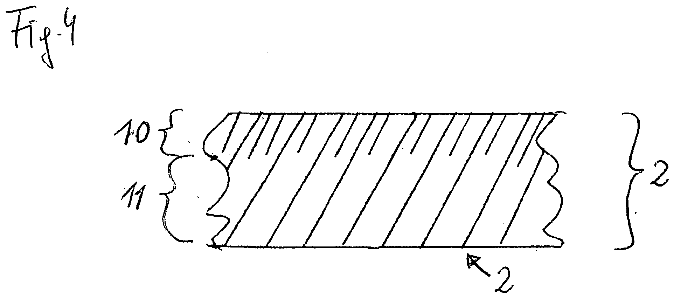

Bei einer bevorzugten Ausführungsform der Erfindung kann vorgesehen sein, dass, wie in Fig. 4 dargestellt, in den der Oberschicht 4 nahen Oberflächenbereich der Trägerschicht 2, die von einem weichen Polyurethanschaum gebildet ist, eine vernetzte Polyurethandispersion integriert ist. Diese Polyurethanschicht wird mit einer Eindringtiefe von 0,02 bis 0,8 mm auf bzw. in die Trägerschicht 2 aufgebracht bzw. eingebracht, bevor diese mittels der Kleberschicht mit der Oberschicht 4 verbunden wird und verursacht dabei eine Dichtezunahme von 12 bis 48 %, vorzugsweise 18 bis 30 %, bezogen auf den Dichtewert der dispersionsfreien Bereiche 11 der Trägerschicht 2.

Sowohl die Trägerschicht 2 als auch die eingebrachte Polyurethandispersion besitzen die Eigenschaften von Elastomeren und weisen etwa die gleiche oder eine sehr ähnliche Härte auf.

Die Oberschicht 4 kann auch in diesem Fall eine Polyurethandispersion enthalten, die ohne Vernetzer über elastomere Eigenschaften verfügt und gegebenenfalls mehr als 2 Gew.-%, vorzugsweise mehr als 4 Gew.-%, Polysiloxan enthalten kann. Die unter der Oberschicht 4 liegende weiche Zwischenschicht 5 und/oder Bindeschicht 7 bestehen aus einer vernetzten, Polyurethan enthaltenden Dispersion und besitzen ebenfalls elastomere Eigenschaften.

Es wird bemerkt, dass unter elastomeren Eigenschaften verstanden wird, dass die gesamte Beschichtung druck- und zugelastisch ist. Die Zwischenschicht 5 und die Bindeschicht 7 sind vor ihrer Vernetzung thermoplastisch oder thermoelastisch und nach ihrer Vernetzung elastomer, auch dann, wenn sie - wie vorgesehen sein kann - zwischen 25 und 55 Gew.-% Polyacrylate enthalten. Die Oberschicht 4 ist somit eine elastomere Schicht mit einer Shore A Härte von 45 bis 78 und gegebenenfalls einem Polysiloxan-Anteil von 2 bis 12 Gew.-%. Die Mittelschicht bzw. Kleberschicht, d.h. die Bindeschicht 7 und/oder die Zwischenschicht 5können jeweils zwischen 25 und 55 Gew.-% Polyacrylate enthalten und sind vernetzt und besitzen eine Shore A Härte zwischen 22 und 50 und besitzen die Eigenschaften von Elastomeren.

Die Oberschicht 4 ist vorteilhafterweise vernetzt und besitzt ausgeprägte elastomere Eigenschaften. Die Schichten 5 und 7 können, aber müssen kein Polyacrylat enthalten. Ohne Polyacrylatgehalt sind sie nach ihrer Vernetzung ebenfalls elastomer. Mit Polyacrylatgehalt sind sie nach ihrer Vernetzung, abhängig von dem Acrylatanteil, thermoelastisch bis elastomer, aber absolut nicht mehr thermoplastisch.

Der Polyurethanschälschaum der Trägerschicht 2 besitzt ausgeprägte elastomere Eigenschaften. Dadurch wird bedingt, dass die Oberschicht 4 und die Trägerschicht 2 über ausgeprägte elastomere Eigenschaften verfügen und die Schichten 5 und 7 thermoelastisch bis elastomer sind. Demzufolge besitzt das Verbundmaterial elastomercharakteristische Eigenschaften. Nach einer Druck- und/oder

Dehnungsverformung geht das Verbundmaterial immer wieder in seine Ausgangslage zurück.

Erfindungsgemäß ergeben sich die einmaligen Eigenschaften des Verbundmaterials, weil alle Schichten elastomere Eigenschaften zeigen und weil alle Schichten gleiche oder ähnliche Härten aufweisen.

Die Oberschicht 4 enthält vorteilhafterweise 65 bis 85 Gew.-% einer Polyurethandispersion mit elastomeren Eigenschaften sowie gegebenenfalls Zuschlagstoffe, insbesondere Vernetzer, Polysiloxane, Pigmente und/oder Verdicker.

Zur Ermittlung der angegebenen Shore A Härten der Oberschicht 4 wird aus der jeweils angesetzten Formulierung ein Prüfkörper erstellt, indem durch mehrmaliges Aufsprühen und Zwischentrocknen der 100 x 100 mm große Prüfkörper mit einer Dicke von 6 mm erstellt wird. Nach einer Lagerung von 48 Stunden wird die Shore A Härte, wie in ISO 7619 vorgesehen, ermittelt. Das gleiche gilt für die Ermittlung der Shore A Härten der Zwischenschicht 5 und/oder der Bindeschicht 7. Für die Ermittlung der Shore A Härte der Trägerschicht 2 wird aus dem Reaktionsgemisch ein nicht geschäumter Prüfkörper erstellt und ebenso geprüft.

Ein aus dem jeweiligen Reaktionsgemisch für die Schaumherstellung der Trägerschicht 2 hergestellter, nicht geschäumter und wie zuvor beschrieben geprüfter Prüfkörper mit einer Stärke von 6 mm besitzt eine Härte von 22 bis 78 Shore A.

Unter Polyacrylatdispersionen werden thermoplastische, leicht klebrige Dispersionen verstanden, die eine Shore A Härte von weniger als 20 aufweisen.

Unter Kapillaren werden Durchgänge durch alle auf die Trägerschicht 2 aufgebrachten Schichten verstanden.

Unter Polysiloxanen werden Silikonverbindungen verstanden, welche der Oberschicht 4 hydrophobe Eigenschaften verleihen und dadurch bedingt auch eine gewisse Trennmittelwirkung haben, die allerdings durch die klebenden Eigenschaften der Polyurethandispersionen der einzelnen Schichten bei Weitem überwogen werden, vor allem auch dadurch, dass die Schichten nass oder feucht zusammengefügt werden und der vorhandene Vernetzer schichtenübergreifend wirkt.

Die Eindringtiefe der vor Aufbringen des Schichtaufbaus der Oberschicht 4 vorgesehenen Schichten auf die Trägerschicht 2 aufgebrachten Polyurethanschicht kann zwischen 0,02 und 1,0 mm betragen. Die Dichtezunahme der mit einer eingedrungenen Polyurethanschicht und einer integrierten Polyurethanschicht versehenen Bereiche 11 der Trägerschicht 2 liegt vorteilhaft zwischen 70 und 95 % bezogen auf die dispersionsfreien Bereiche der Trägerschicht 2. Die in die Trägerschicht 2 integrierte Polyurethanschicht ist eine verfestigte elastomere Dispersion, die vernetzt ist und die Wände des offenzelligen Schaums der Trägerschicht 2 verstärkt, ohne dabei die Zellen der Trägerschicht 2 zu verschließen. Diese Verstärkung hat darüber hinaus den Vorteil, dass Schälschäume auf aromatischer Polyester- oder Polyetherbasis im Bereich der Verstärkung sich nicht oder kaum durch Lichteinflüsse verfärben.

Die Zwischenschicht 5 oder die Bindeschicht 7 sind jeweils von einer vernetzten Polyurethandispersion gebildet, welche vor ihrer Vernetzung thermoplastisch oder thermoelastisch war. Vernetzen bedeutet, dass danach alle Schichten elastomere Eigenschaften aufweisen.

Es ist wichtig, dass der offenzellige Schaum der Trägerschicht 2 eine gleiche oder eine ähnliche Härte wie die verfestigten und vernetzten Polyurethandispersionen der Oberschicht 4, der Zwischenschicht 7 und der Bindeschicht 5 aufweist, weil sodann beim Biegen keine Knitterfalten entstehen, da alle Polymerschichten gleiches oder sehr ähnliches elastisches Druck- und Dehnungsverhalten aufweisen.

Da ein derart leichter und offenzelliger Schaum der Trägerschicht 2 eine sehr geringe Weitereißfestigkeit aufweist und sich bei geringem Druck reversibel zusammendrücken lässt, wird dieser Nachteil überraschenderweise dadurch behoben, dass in den der Oberschicht 4 nahen Bereich die weitere Polyurethandispersionsschicht integriert wird, die in den Oberflächenbereich eingedrungen bzw. integriert ist. Damit werden nicht nur die Druck-, Reiß- und Weitereißfestigkeit verbessert, sondern auch die Optik und die Haptik. Beim Dehnen von bis zu 50 % bleibt das Aussehen der Oberfläche unverändert.

Bei der Erstellung des Verbundmaterials besitzen die Oberschicht 4 bereits vor dem Vernetzen und die Bindeschicht 7 und die Zwischenschicht 5 nach dem Vernetzen und die Trägerschicht 2 immer elastomere Eigenschaften.

Die Optimierung des Aufbaus bzw. der Eigenschaften des Verbundmaterials wird erreicht durch die Kombination der chemisch unterschiedlich aufgebauten Polyurethane mit ähnlichen elastomeren Eigenschaften und ähnlicher oder gleicher Härte.

Es ist zu bemerken, dass ein in der Zwischenschicht 5 und/oder in der Bindeschicht 7 enthaltener Vernetzer schichtübergreifend wirkt. Ein derartiges Übergreifen tritt dann ein, wenn eine der Schichten 5 und/oder 7 noch nass oder feucht mit der Oberschicht 4 zusammengebracht wird und die jeweiligen Schichten noch etwa 10 bis 50 Gew.-% Wasser enthalten und/oder wenn die grifftrockene Oberschicht 4 noch 2 bis 8 Gew.-% Wasser enthält. In diesem Fall wirkt der Vernetzer schichtübergreifend, wodurch eine verbesserte Verbindung der Schichten bei ihrer Verbindung durch Aufeinanderlegen bzw. Zusammenbringen, gegebenenfalls unter Druck, eintritt.

Im Folgenden wird ein Beispiel für ein erfindungsgemäß erstelltes Verbundmaterial angegeben bzw. dessen Herstellung näher erläutert.

Auf einen 2 mm starken Polyurethanschälschaum für die Trägerschicht 2 mit einem Flächengewicht von 180 g/m² wird eine Polyurethan enthaltende, mit einem Vernetzer versehene Dispersion aufgesprüht bzw. derart aufgetragen, dass sie ca. 1,0 mm in den Schaum eindringt und der Schälschaum der Trägerschicht 2 nach ihrer Trocknung ein Flächengewicht von 255 g/m² besitzt. Die verfestigte und vernetzte Polyurethan enthaltende Dispersion verstärkt die dünnen Zellwände des offenzelligen Schälschaums der Trägerschicht 2, ohne die Schaumstruktur, d.h. die Offenzelligkeit, zu verändern. Auf diese Weise ist es möglich, vorgefertigte, mit Polyurethandispersion integrierte Trägerschichten 2 auf Lager zu halten bzw. nach Bedarf zu verwenden um sie mit der Oberschicht 4 über die Kleberschicht zu verbinden. Erfindungsgemäß können die Trägerschicht 2 und die in diese integrierte Polyurethandispersion zusätzlich mit einem Schweißhilfsmittel, z.B. einer Polyvinylacetatdispersion imprägniert sein, damit das Verbundmaterial, z.B. beim Einsatz für Sonnenblenden, thermisch verschweißbar wird.

Zur weiteren Verstärkung der dünnen Zellwände des Schälschaums der Trägerschicht 2 kann die Polyurethan enthaltende Dispersion auch bis zu 10 Gew.-%, bezogen auf die verfestigte Polyurethandispersion, textile Mahl- oder Schnittflocken mit einer Länge zwischen 0,01 bis 1,8 mm enthalten.

Unter offenzelligen Polyurethanschäl- oder spaltschäumen sind auch solche auf Polyester- bzw. Polyurethanbasis zu verstehen, bei denen eine oder beide Oberflächen eine höhere Dichte als der mittlere Bereich des Schaums aufweisen.

Die Verdichtung erfolgt nach dem Schälen oder Spalten durch kurze Einwirkung von Hitze auf eine oder beide Schaumoberflächen und gleichzeitigem Ausüben von Druck. So kann z.B. ein 4 mm starker Schaum mit dieser Behandlung auf 2,5 mm reduziert werden. Die Oberflächenverdichtung führt zu kleineren offenen Zellen, verursacht aber keine luft- oder wasserdichte Haut, wie dies bei in Formen hergestellten Schäumen der Fall ist.

## Patentansprüche

1. Verbundmaterial mit einer polymeren Oberschicht (4), die zumindest teilweise oder zur Gänze aus einer verfestigten, und gegebenenfalls vernetzten, Polyurethandispersion besteht, wobei die Oberflächenstruktur der Oberschicht (4) durch Antrocknen der Polyurethandispersion auf einer Matrize, insbesondere auf einer Silikonkautschukmatrize, erstellt ist, und wobei die Oberschicht (4) über zumindest eine Kleberschicht mit einer Trägerschicht (2) verbunden ist, **dadurch gekennzeichnet,**
- **dass** die Trägerschicht (2) zum überwiegenden Teil oder zur Gänze mit einem offenzelligen Polyurethanschaum gebildet ist, an den die zwischen 2 und 12 Gew-% Polysiloxan enthaltende Oberschicht (4) mit der Kleberschicht angebunden ist,
- **dass** zur Verbindung von Oberschicht (4) und Trägerschicht (2) zwischen der Oberschicht (4) und der Trägerschicht (2) als Kleberschicht eine Zwischenschicht (5) oder eine Doppelschicht, das heißt ein Verbund der Zwischenschicht (5) mit einer zwischen der Trägerschicht (2) und der Zwischenschicht (5) liegenden Bindeschicht (7), vorgesehen ist,
- **dass** die Zwischenschicht (5) und/oder die Bindeschicht (7) mit einer verfestigten und vernetzten Polyurethandispersion gebildet sind, und/oder dass die Oberschicht (4) mit der Zwischenschicht (5) untrennbar verbunden ist und eine oberflächlich strukturierte, verfestigte Polyurethandispersion enthaltende Schicht darstellt,
- **dass** die Bereiche der Trägerschicht (2), in welche die Polyurethandispersion der Kleberschicht beim Auftragen kontrolliert eingedrungen ist, eine Dichte besitzen, welche zwischen 12% und 48%, vorzugsweise zwischen 18 % und 30 %, über der Dichte der kleberschichtfreien Bereiche der Trägerschicht (2) liegt.

2. Verbundmaterial nach Anspruch 1, **dadurch gekennzeichnet, dass** der Anteil an offenen Zellen im Polyurethanschaum der Trägerschicht (2) größer als 90 % ist und/oder dass der Polyurethanschaum der Trägerschicht (2) zumindest auf der der Oberschicht (4) zugekehrten Fläche, vorzugsweise auf seinen beiden Oberflächen, hautfrei ist und/oder dass der eingesetzte Polyurethanschaum der Trägerschicht (2) ein Schäl- oder Spaltschaum ist und/oder dass das Gewicht des als Trägerschicht (2) eingesetzten Polyurethanschaumes 15 bis 110 kg/m³, vorzugsweise 30 bis 85 kg/m³, beträgt.

3. Verbundmaterial nach Anspruch 1 oder 2, **dadurch gekennzeichnet,**
- **dass** in die Zwischenschicht (5) oder in die Bindeschicht (7) ein Netz oder ein Gewirke oder ein Vlies (3) eingelegt oder eingebettet ist und/oder
- **dass** das Netz oder Gewirke oder Vlies (3) auf der der Zwischenschicht (5) zugewendeten Oberfläche der Trägerschicht (2) an- oder aufliegt und/oder an die Oberfläche der Trägerschicht (2), vorzugsweise durch Flammkaschieren, angebunden ist.

4. Verbundmaterial nach Anspruch 3, **dadurch gekennzeichnet,**
- **dass** das Flächengewicht des Netzes oder Gewirkes oder Vlieses (3) 15 bis 120 g/m², vorzugsweise 30 bis 80 g/m², beträgt und/oder
- **dass** die Abstände zwischen den Fäden oder Garnen des Netzes oder Gewirkes oder Vlieses (3) oder die längsten Abmessungen der zwischen den Fäden oder Garnen liegenden Öffnungen oder Maschen 0,02 bis 0,5 mm, vorzugsweise 0,05 bis 0,15 mm, betragen und/oder
- **dass** das Netz oder Gewirke oder Vlies (3) eine Dicke von 0,10 bis 0,48 mm besitzt, und/oder
- **dass** die Netze oder Gewirke oder Vliese (3) mit Fäden oder Garnen aus Polyester oder Polyamid erstellt sind, wobei gegebenenfalls auch ein Anteil der Fäden oder Garne von Baumwollfasern gebildet ist, und/oder
- **dass** die Zwischenschicht (5) oder die Bindeschicht (7), gegebenenfalls ein eingelegtes oder an die Trägerschicht (2) angebundenes Netz oder Gewirke oder Vlies (3) zumindest stellenweise durchdringend, 0,02 bis 1,0 mm, insbesondere 0,02 bis 0,8 mm, vorzugsweise 0,05 bis 0,5 mm, in den offenzelligen Polyurethanschaum der Trägerschicht (2) eingebracht oder eingedrungen oder in diesen integriert ist.

5. Verbundmaterial nach einem der Ansprüche 1 bis 4, **dadurch gekennzeichnet, dass** die Dicke der Trägerschicht (2) 1,0 bis 5 mm, vorzugsweise 1,5 bis 3,5 mm, beträgt.

6. Verbundmaterial nach einem der Ansprüche 1 bis 5, **dadurch gekennzeichnet,**
- **dass** die verfestigte Polyurethandispersion der Oberschicht (4) und gegebenenfalls auch die Zwischenschicht (5) Pigmente enthält und aus einem anderen Polyurethan besteht als die Zwischenschicht (5) oder die Bindeschicht (7) und vernetzt ist und/oder
- **dass** die Polyurethandispersionen für die Zwischenschicht (5) und die Bindeschicht (7) in ihrer Zusammensetzung weitgehend identisch sind und/oder bis zu 55 Gew-% Polyacrylat enthalten und vernetzt sind.

7. Verbundmaterial nach einem der Ansprüche 1 bis 6, **dadurch gekennzeichnet, dass** die Bindeschicht (7) ein Flächengewicht von 20 bis 100 g/m², vorzugsweise 25 bis 80 g/m², aufweist und eine, gegebenenfalls Polyacrylate und/oder Kunstharze enthaltende, Schicht einer verfestigten wässerigen Polyurethandispersion ist, die vorzugsweise denselben oder einen sehr ähnlichen chemischen Aufbau wie die Zwischenschicht (5) besitzt.

8. Verbundmaterial nach einem der Ansprüche 1 bis 7, **dadurch gekennzeichnet, dass** an die der Oberschicht (4) abgewendete Fläche der Trägerschicht (2) eine Basisschicht (6), vorzugsweise aus textilem Material, Pappe, Papier, im Spritz- oder Pressguss gefertigten Kunststoffplatten oder in Form eines Autohimmels, angebunden ist und/oder
- dass auf die Oberfläche der Oberschicht (4) eine sehr dünne, hydrophobe Finish-Schicht (9) in einer Stärke von weniger als 0,005 mm aufgebracht ist, und/oder
- dass die Oberschicht (4) eine - eine verfestigte Polyurethandispersion enthaltende und auf einer strukturierten Matrize oder auf einer Silikonkautschukunterlage bzw. -form oder auf einer strukturierten Papierunterlage gebildete - oberflächenstrukturierte Schicht ist.

9. Verbundmaterial nach einem der Ansprüche 1 bis 8, **dadurch gekennzeichnet,**
- **dass** die Oberschicht (4) eine verfestigte Polyurethandispersion enthält und eine Härte zwischen 45 und 78 Shore A besitzt und/oder
- **dass** die Bindeschicht (7) vor ihrer Vernetzung zu 50 bis 85 Gew.-% kristalline Struktur besitzendes, thermoplastisches Polyurethan enthält und mit der Oberschicht (4) vernetzt ist und/oder
- **dass** die Zwischenschicht (5) und/oder die Bindeschicht (7) jeweils bis zu 55 Gew.-%, vorzugsweise bis zu 25 Gew.-%, Polyacrylate enthalten oder enthält und jeweils eine Härte zwischen 22 und 50 Shore A besitzen oder besitzt und/oder
- **dass** die Gesamtdicke der Oberschicht (4) und der Zwischenschicht (5) 0,12 bis 0,25 mm, vorzugsweise 0,10 bis 0,22 mm, beträgt.

10. Verbundmaterial nach einem der Ansprüche 1 bis 9, **dadurch gekennzeichnet,**
- **dass** in der Oberschicht (4) und der Zwischenschicht (5) und der Bindeschicht (7) Vernetzer enthalten und die Schichten vernetzt sind und/oder die Zwischenschicht (5) mit der Bindeschicht (7) durch Aneinanderfügen in noch feuchtem Zustand quervernetzt ist und/oder
- **dass** in der Oberschicht (4) und/oder in der Zwischenschicht (5) bis zu 4 Gew.-% transparente Mikrohohlkugeln aus Kunststoff enthalten sind und/oder
- **dass** in den Polyurethandispersionen Feststoffe in Form von Pigmenten, Vernetzern und/oder Verdickern enthalten sind und/oder
- **dass** in der Oberschicht (4) und/oder der Zwischenschicht (5), insbesondere bis zu den offenen Zellen des Schäl- oder Spaltschaumes durchgehende, Kapillaren ausgebildet sind.

11. Verbundmaterial nach einem der Ansprüche 1 bis 10, **dadurch gekennzeichnet,**
- **dass** die Oberschicht (4) eine Stärke von 0,04 bis 0, 14mm, vorzugsweise von 0,08 bis 0, 11 mm, aufweist und/oder
- **dass** die Zwischenschicht (5) eine Stärke von 0,04 bis 0, 11 mm, vorzugsweise von 0,06 bis 0,08 mm, aufweist und/oder
- **dass** die Oberschicht (4) zwischen 55 und 95 Gew-%, vorzugsweise zwischen 65 und 85 Gew-%, einer verfestigten, vernetzten Polyurethandispersion enthält und gegebenenfalls eine Dichte zwischen 0,9 und 1, 12 g/cm³ aufweist.

12. Verbundmaterial nach einem der Ansprüche 3 bis 11, **dadurch gekennzeichnet, dass** bei Einsatz von Polyurethanschäumen mit einem Gewicht von 15 bis 45 kg/m³ als Trägerschicht (2) in die Zwischenschicht (5) oder in die Bindeschicht (7) ein Netz oder Gewirke oder Vlies (3) eingebettet und/oder an die Trägerschicht (2), vorzugsweise durch Flammkaschieren, angebunden ist.

13. Verbundmaterial nach einem der Ansprüche 1 bis 12, **dadurch gekennzeichnet, dass** die Trägerschicht (2) ein nicht thermoplastisches Elastomer ist und/oder dass in dem der Oberschicht (4) zugekehrten Oberflächenbereich (10) der Trägerschicht (2) eine vernetzte Polyurethandispersionsschicht integriert ist, die eine Eindringtiefe von 0,02 bis 1,0 mm besitzt und dass in diesen verstärkten Oberflächenbereich (10) der Trägerschicht (2) die Polyurethandispersion der Zwischenschicht (5) oder der Bindeschicht (7) kontrolliert eingedrungen ist.

14. Verbundmaterial nach Anspruch 13, **dadurch gekennzeichnet, dass** die Bereiche der Trägerschicht (2), in welche Polyurethandispersion integriert und die Kleberschicht kontrolliert eingedrungen ist, eine Dichte besitzen, die zwischen 30 und 95 %, vorzugsweise zwischen 30 und 80 %, über der Dichte der kleberschichtfreien Bereiche (11) der Trägerschicht (2) liegen.

15. Verbundmaterial nach einem der Ansprüche 1 bis 13, **dadurch gekennzeichnet, dass** die Oberschicht (4) eine elastomere Schicht mit verzweigter, vernetzter Struktur ist, welche vorzugsweise eine Shore A Härte von 45 bis 78 aufweist und/oder einen Polysiloxan-Anteil von 2 bis 12 Gew.-% aufweist, und/oder dass die Bindeschicht (7) und/oder die gegebenenfalls vorhandene Zwischenschicht (5) elastomere Eigenschaften besitzen und/oder dass die vernetzte Polyurethanschicht der Zwischenschicht (5) und/oder die Bindeschicht (7) zwischen 25 und 55 Gew.-% Polyacrylate enthalten und/oder eine Shore A Härte von 22 bis 50 besitzen.

16. Verbundmaterial nach einem der Ansprüche 1 bis 15, **dadurch gekennzeichnet, dass** die Oberschicht (4) auf einer negativ strukturierten Unterlage, vorzugsweise auf einer Silikonkautschukplatte oder auch auf einem Silikonkautschukband oder auf einem Trennpapier ausgebildet ist, das Aussehen von Seidengewebe, Gewebe aus Kohlenstofffasern, ein technisches Aussehen mit Vertiefungen mit dreieckiger, quadratischer, rechteckiger oder runder Form mit einer Tiefe zwischen 0,002 und 0,01 mm und mit Abständen von 0,001 bis 0,005 mm besitzt oder dass die negativ gestalteten Strukturen mit einem Laser ausgebildet sind und/oder dass die Oberfläche das Aussehen von Narbenleder aufweist.

17. Mit einem Verbundmaterial (1) nach einem der Ansprüche 1 bis 16 hergestellte Gegenstände in Form von Kraftfahrzeuginnenwandverkleidungen, Autohimmeln, Kofferraumauskleidungen, Tür- und Sitzrücken-Verkleidungen und Kopfstützen für Kraftfahrzeuge, Taschen, Schaftteilen und Futtern für Schuhe und Sportschuhe.

18. Verfahren zur Herstellung eines Verbundmaterials nach einem der Ansprüche 1 bis 17, **dadurch gekennzeichnet, dass** auf eine oberflächenstrukturierte, erwärmte oder heiße Matrix, welche beispielsweise die Form eines Autohimmels aufweist, die - auf einer wässrigen Polyurethandispersion basierende - Oberschicht (4) aufgetragen wird,
- dass auf diese Oberschicht (4) nach ihrem Antrocknen oder Trocknen die Zwischenschicht (5) aufgebracht wird,
- dass auf die noch feuchte Zwischenschicht (5) entweder direkt die Trägerschicht (2) oder die mit der Bindeschicht (7), mit einer in der Bindeschicht (7) eingebetteten oder auf die Trägerschicht (2) angebundenen Lage eines Netzes oder Gewirkes oder Vlieses (3), versehene, Trägerschicht (2) oder ohne eine derartige Trägerschicht aufgebracht wird, wobei die Zwischenschicht (5) oder die Bindeschicht (7) sich jeweils noch im feuchten Zustand befindet, und
- dass die derart übereinanderliegenden Schichten (4, 5, 7, 3, 2) durch Aneinanderdrücken zu dem platten- oder bahnenförmigen Verbundmaterial (1) verbunden werden.

19. Verfahren nach Anspruch 18, **dadurch gekennzeichnet, dass** die Zwischenschicht (5) oder die Bindeschicht (7) auf die, gegebenenfalls mit einem Netz oder Gewirke (3) verbundene, Oberfläche der Trägerschicht (2) aufgebracht und das Polyurethanklebermaterial der Zwischenschicht (5) oder der Bindeschicht (7) nur in einen oberflächennahen Teilbereich (7') des die Trägerschicht (2) bildenden offenzelligen Polyurethanschaumes eingebracht wird.

## Claims

1. Composite material with a polymer upper layer (4), formed at least partly or entirely from a solidified and, where appropriate, cross-linked polyurethane dispersion, wherein the surface structure of the upper layer (4) is produced by drying the polyurethane dispersion on a matrix, in particular on a silicone rubber matrix, and wherein the upper layer (4) is joined to a substrate (2) via at least one adhesive layer, **characterized in that**,
- the substrate (2) is predominantly or entirely formed from an open-cell polyurethane foam, onto which the upper layer (4) containing between 2 and 12 wt. % of polysiloxane is bonded via the adhesive layer,
- an intermediate layer (5) or a double layer, i.e. a composite of the intermediate layer (5) and a bonding layer (7) disposed between the substrate (2) and the intermediate layer (5), is provided as adhesive layer between the upper layer (4) and the substrate (2) for joining the upper layer (4) to the substrate (2),
- the intermediate layer (5) and/or the bonding layer (7) are formed by a solidified and cross-linked polyurethane dispersion, and/or the upper layer (4) is inseparably joined to the intermediate layer (5) and forms a surface structured solidified layer containing polyurethane dispersion,
- the regions of the substrate (2), into which the polyurethane dispersion of the adhesive layer has penetrated in a controlled manner while being deposited have a density that is between 12% and 48%, preferably between 18% and 30%, above the density of the regions of the substrate (2) that are free of the adhesive layer.

2. Composite material according to claim 1, **characterized in that** the fraction of open cells in the polyurethane foam of the substrate (2) is greater than 90% and/or the polyurethane foam of the substrate (2) is free of skin at least on the surface facing the upper layer (4), preferably on both surfaces, and/or the polyurethane foam used for the substrate (2) is a peeled or cleaved foam and/or the weight of the polyurethane foam used in the substrate (2) is 15 to 110 kg/m³, preferably 30 to 85 kg/m³.

3. Composite material according to claim 1 or 2, **characterized in that**,
- a netting, woven fabric or nonwoven fabric (3) is inserted or embedded in the intermediate layer (5) or in the bonding layer (7) and/or
- the netting, woven fabric or nonwoven fabric (3) is disposed on the surface of the substrate (2) facing the intermediate layer (5) and/or bonded to the surface of the substrate (2), preferably by flame lamination.

4. Composite material according to claim 3, **characterized in that**,
- the basis weight of the netting, woven fabric or nonwoven fabric (3) is 15 to 120 g/m², preferably 30 to 80 g/m², and/or
- the spacings between the threads or yarns of the netting, woven fabric or nonwoven fabric (3) or the longest dimensions of the openings or meshes located between the threads or yarns are 0.02 to 0.5 mm, preferably 0.05 to 0.15 mm, and/or
- the netting, woven fabric or nonwoven fabric (3) has a thickness of 0.10 to 0.48 mm, and/or
- the nettings, woven fabrics or nonwoven fabrics (3) are made from threads or yarns of polyester or polyamide, wherein also a portion of the threads or yarns are made of cotton fibres, where appropriate, and/or
- the intermediate layer (5) or bonding layer (7), where appropriate an at least partially penetrating netting, woven fabric or nonwoven fabric (3) inserted in or bonded to the substrate (2), is introduced, penetrated or integrated 0.02 to 1.0 mm, in particular 0.02 to 0.8 mm, preferably 0.05 to 0.5 mm, into the open-cell polyurethane foam of the substrate (2).

5. Composite material according to any of claims 1 to 4, **characterized in that** the substrate (2) has a thickness of 1.0 to 5 mm, preferably 1.5 to 3.5 mm.

6. Composite material according to any of claims 1 to 5, **characterized in that**,
- the solidified polyurethane dispersion of the upper layer (4) and, where appropriate, of the intermediate layer (5) contains pigments and is composed of a different polyurethane than the intermediate layer (5) or the bonding layer (7) and is cross-linked and/or
- the polyurethane dispersions for the intermediate layer (5) and the bonding layer (7) are largely identical in their composition and/or contain up to 55 wt. % polyacrylate and are cross-linked.

7. Composite material according to any of claims 1 to 6, **characterized in that** the bonding layer (7) has a basis weight of 20 to 100 g/m², preferably 25 to 80 g/m², and is a layer of a solidified aqueous polyurethane dispersion containing, where appropriate, polyacrylate and/or synthetic resin, which preferably has the same or a very similar chemical makeup as the intermediate layer (5).

8. Composite material according to any of claims 1 to 7, **characterized in that** a base layer (6), preferably made of textile material, cardboard, paper, plastic plates produced by injection moulding or compression moulding or in the form of a car ceiling, is joined to the surface of the substrate (2) facing away from the upper layer (4) and/or
- a very thin, hydrophobic finish-layer (9) with a thickness of less than 0.005 mm is applied onto the surface of the upper layer (4), and/or
- the upper layer (4) is a surface structured layer containing a solidified polyurethane dispersion and formed on a structured matrix or a silicone rubber underlayment or form or on a structured paper underlayment.

9. Composite material according to any of claims 1 to 8, **characterized in that**
- the upper layer (4) contains a solidified polyurethane dispersion and has a hardness between 45 to 78 Shore A and/or
- the bonding layer (7) prior to being cross-linked contains 50 to 85 wt. % of thermoplastic polyurethane having a crystalline structure and is cross-linked with the upper layer (4) and/or
- the intermediate layer (5) and/or the bonding layer (7) each contain up to 55 wt. %, preferably up to 25 wt. %, of polyacrylates and each have a hardness between 22 and 50 Shore A and/or
- the upper layer (4) and intermediate layer (5) have an overall thickness of 0.12 to 0.25 mm, preferably 0.10 to 0.22 mm.

10. Composite material according to any of claims 1 to 9, **characterized in that**,
- the upper layer (4) and the intermediate layer (5) and the bonding layer (7) have cross-linking agents and the layers are cross-linked and/or the intermediate layer (5) is cross-linked with the bonding layer (7) by joining together in a still moist state and/or
- the upper layer (4) and/or the intermediate layer (5) contain up to 4 wt. % of transparent plastic hollow microspheres and/or
- the polyurethane dispersions contain solids in the form of pigments, cross-linking agents and/or thickeners and/or
- the upper layer (4) and/or the intermediate layer (5) has capillaries that are continuous and extend to the open pores of the peeled or cleaved foam.

11. Composite material according to any of claims 1 to 10, **characterized in that**,
- the upper layer (4) has a thickness of 0.04 to 0.14 mm, preferably 0.08 to 0.11 mm, and/or
- the intermediate layer (5) has a thickness of 0.04 to 0.11 mm, preferably 0.06 to 0.08 mm, and/or
- the upper layer (4) contains between 55 and 95 wt. %, preferably between 65 and 85 wt. %, a solidified, cross-linked polyurethane dispersion and where appropriate has a density between 0.9 and 1.12 g/cm³.

12. Composite material according to any of claims 3 to 11, **characterized in that**, when using polyurethane foam of a weight of 15 to 45 kg/cm³ as a substrate (2), a netting, woven fabric or nonwoven fabric (3) is embedded in the intermediate layer (5) or in the bonding layer (7), and/or is bonded to the substrate (2), preferably by flame lamination.

13. Composite material according to any of claims 1 to 12, **characterized in that** the substrate (2) is a non-thermoplastic elastomer and/or a cross-linked polyurethane dispersion layer having a depth of penetration of 0.02 to 1.0 mm is integrated in the surface region (10) of the substrate (2) facing the upper layer (4), and the polyurethane dispersion of the intermediate layer (5) or the bonding layer (7) has penetrated in a controlled manner into said reinforced surface region (10) of the substrate (2).

14. Composite material according to claim 13, **characterized in that** the regions of the substrate (2), into which polyurethane dispersion is integrated and the adhesive layer has penetrated in a controlled manner, have a density that is between 30 and 95%, preferably between 30 and 80%, above the density of the regions (11) of the substrate (2) that are free of adhesive layer.

15. Composite material according to any of claims 1 to 13, **characterized in that** the upper layer (4) is an elastomeric layer with a branched, cross-linked structure which preferably has a Shore A hardness of 45 to 78 and/or has a polysiloxane fraction of 2 to 12 wt. %, and/or the bonding layer (7) and/or, where appropriate, the existing intermediate layer (5) have elastomeric properties and/or the cross-linked polyurethane layer of the intermediate layer (5) and/or the bonding layer (7) contain between 25 and 55 wt. % polyacrylates and/or have a Shore A hardness of 22 to 50.

16. Composite material according to any of claims 1 to 15, **characterized in that** the upper layer (4) is made on a negatively structured underlayment, preferably on a silicone rubber sheet or a silicone rubber band or on a separation paper, having an appearance of a silk fabric, a carbon fibre fabric, a technical appearance with depressions with a triangular shape, a square shape, a rectangular shape or a round shape with a depth between 0.002 and 0.01 mm and spacings of 0.001 to 0.005 mm, or that the negatively formed structures are created with a laser and/or the surface has the appearance of grain leather.

17. Objects produced with a composite material (1) according to any of claims 1 to 16, the objects selected from a group consisting of motor vehicle interior wall linings, car ceilings, luggage trunk linings, door and back seat linings and head rests for motor vehicles, purses, shaft parts and linings for shoes and sneakers.

18. Method for producing a composite material according to any of claims 1 to 17, **characterized in that** an upper layer (4) based on an aqueous polyurethane dispersion is deposited onto a surface-structured, heated or hot matrix having for example the form of a car ceiling,
- the intermediate layer (5) is applied to the upper layer (4) after the upper layer is at least partially dried or dried,
- to the still moist intermediate layer (5) either the substrate (2) is applied directly, or the substrate (2) comprising the bonding layer (7) with a netting, woven fabric or nonwoven fabric (3) embedded in the bonding layer (7) or bonded to a position on the substrate (2), or without such a substrate, is applied while the intermediate layer (5) or the bonding layer (7) are each still in a moist state, and
- said layers (4, 5, 7, 3, 2) lying on top of each other are joined to form, by pressing together, the plate shaped or web shaped composite material (1).

19. Method according to claim 18, **characterized in that** the intermediate layer (5) or the bonding layer (7) is deposited on the surface of the substrate (2) joined to a netting or woven fabric (3), where appropriate, and the polyurethane adhesive material of the intermediate layer (5) or the bonding layer (7) is only introduced into a partial region (7') near the surface of the open-cell polyurethane foam forming the substrate (2).

## Revendications

1. Matériau composite avec une couche supérieure polymère (4) qui est constituée, au moins en partie ou en totalité, d'une dispersion de polyuréthane solidifiée et éventuellement réticulée, la structure de surface de la couche supérieure (4) étant fabriquée par séchage de la dispersion de polyuréthane sur une matrice, notamment sur une matrice de caoutchouc de silicone, et la couche supérieure (4) étant liée à une couche de support (2) par l'intermédiaire d'au moins une couche adhésive,
**caractérisé**
- **en ce que** la couche de support (2) est formée, en majeure partie ou en totalité, avec une mousse de polyuréthane à alvéoles ouvertes à laquelle la couche supérieure (4) contenant entre 2 et 12% en poids de polysiloxane est liée avec la couche adhésive,
- **en ce que**, pour la liaison de la couche supérieure (4) et de la couche de support (2), il est prévu comme couche adhésive entre la couche supérieure (4) et la couche de support (2) une couche intermédiaire (5) ou une double couche, c'est-à-dire un assemblage de la couche intermédiaire (5) avec une couche de liaison (7) située entre la couche de support (2) et la couche intermédiaire (5),
- **en ce que** la couche intermédiaire (5) et/ou la couche de liaison (7) sont formées avec une dispersion de polyuréthane solidifiée et réticulée et/ou en ce que la couche supérieure (4) est liée de manière inséparable avec la couche intermédiaire (5) et représente une couche dont la surface est structurée et qui contient une dispersion de polyuréthane solidifiée,
- **en ce que** les zones de la couche de support (2) dans lesquelles la dispersion de polyuréthane de la couche adhésive a pénétré de manière contrôlée lors de l'application ont une densité supérieure de 12% à 48%, de préférence de 18% à 30%, à la densité des zones sans couche adhésive de la couche de support (2).

2. Matériau composite selon la revendication 1, **caractérisé en ce que** la proportion d'alvéoles ouvertes dans la mousse de polyuréthane de la couche de support (2) est supérieure à 90% et/ou **en ce que** la mousse de polyuréthane de la couche de support (2) est sans peau au moins sur la surface adjacente à la couche supérieure (4), de préférence sur ses deux surfaces, et/ou **en ce que** la mousse de polyuréthane utilisée de la couche de support (2) est une mousse pelée ou fendue et/ou **en ce que** le poids de la mousse de polyuréthane utilisée comme souche de support (2) vaut de 15 à 110 kg/m³, de préférence de 30 à 85 kg/m³.

3. Matériau composite selon la revendication 1 ou 2, **caractérisé**
- **en ce qu'**un treillis ou un tricot ou un non-tissé (3) est inséré ou intégré dans la couche intermédiaire (5) ou dans la couche de liaison (7) et/ou
- **en ce que** le treillis ou tricot ou non-tissé (3) repose sur celle des surfaces de la couche de support (2) qui est proche de la couche intermédiaire (5) et/ou est lié à la surface de la couche de support (2), de préférence par contrecollage à la flamme.

4. Matériau composite selon la revendication 3, **caractérisé**
- **en ce que** le poids surfacique du treillis ou tricot ou non-tissé (3) vaut de 15 à 120 g/m², de préférence de 30 à 80 g/m² et/ou
- **en ce que** les distances entre les fibres ou les fils du treillis ou tricot ou non-tissé (3) ou les plus longues dimensions des ouvertures ou mailles situées entre les fibres ou fils valent de 0,02 à 0,5 mm, de préférence de 0,05 à 0,15 mm, et/ou
- **en ce que** le treillis ou tricot ou non-tissé (3) a une épaisseur de 0,10 à 0,48 mm et/ou
- **en ce que** les treillis ou tricots ou non-tissés (3) sont fabriqués avec des fibres ou fils en polyester ou en polyamide, une partie des fibres ou fils étant aussi formée le cas échéant de fibres de coton, et/ou
- **en ce que** la couche intermédiaire (5) ou la couche de liaison (7), le cas échéant un treillis ou tricot ou non-tissé (3) inséré ou lié à la couche de support (2), est insérée ou introduite ou intégrée, de manière au moins par endroits traversante, de 0,02 à 1,0 mm, notamment de 0,02 à 0,8 mm, de préférence de 0,05 à 0,5 mm, dans la mousse de polyuréthane à alvéoles ouvertes de la couche de support (2).

5. Matériau composite selon l'une des revendications 1 à 4, **caractérisé en ce que** l'épaisseur de la couche de support (2) vaut de 1,0 à 5 mm, de préférence de 1,5 à 3,5 mm.

6. Matériau composite selon l'une des revendications 1 à 5, **caractérisé**
- **en ce que** la dispersion de polyuréthane solidifiée de la couche supérieure (4) et éventuellement aussi la couche intermédiaire (5) contient des colorants et est constituée d'un polyuréthane différent de celui de la couche intermédiaire (5) ou de la couche de liaison (7) et est réticulée et/ou
- **en ce que** les dispersions de polyuréthane pour la couche intermédiaire (5) et pour la couche de liaison (7) ont une composition largement identique et/ou contiennent jusqu'à 55% en poids de polyacrylate et sont réticulées.

7. Matériau composite selon l'une des revendications 1 à 6, **caractérisé en ce que** la couche de liaison (7) a un poids surfacique de 20 à 100 g/m², de préférence de 25 à 80 g/m², et est une couche, contenant éventuellement du polyacrylate et/ou de la résine synthétique, d'une dispersion de polyuréthane aqueuse solidifiée qui a de préférence une structure chimique identique ou très semblable à celle de la couche intermédiaire (5).

8. Matériau composite selon l'une des revendications 1 à 7, **caractérisé**
- **en ce qu'**une couche de base (6), de préférence des plaques plastiques fabriquées en textile, carton, papier, par moulage par injection ou à la presse, ou sous la forme d'un habillage de plafond d'automobile, est liée à celle des surfaces de la couche de support (2) qui est éloignée de la couche supérieure (4) et/ou
- **en ce qu'**une très fine couche de finition hydrophobe (9) d'une épaisseur de moins de 0,005 mm est appliquée sur la surface de la couche supérieure (4) et/ou
- **en ce que** la couche supérieure (4) est une couche dont la surface est structurée - qui contient une dispersion de polyuréthane solidifiée et qui est formée sur une matrice structurée ou sur un substrat ou moule de caoutchouc de silicone ou sur un substrat de papier structuré.

9. Matériau composite selon l'une des revendications 1 à 8, **caractérisé**
- **en ce que** la couche supérieure (4) contient une dispersion de polyuréthane solidifiée et a une dureté comprise entre 45 et 78 Shore A et/ou
- **en ce que** la couche de liaison (7) contient du polyuréthane thermoplastique ayant une structure cristalline de 50 à 85% en poids avant sa réticulation et est réticulée avec la couche supérieure (4) et/ou
- **en ce que** la couche intermédiaire (5) et/ou la couche de liaison (7) contiennent chacune jusqu'à 55% en poids, de préférence jusqu'à 25% en poids, de polyacrylate et ont chacune une dureté comprise entre 22 et 50 Shore A et/ou
- **en ce que** l'épaisseur totale de la couche supérieure (4) et de la couche intermédiaire (5) vaut de 0,12 à 0,25 mm, de préférence de 0,10 à 0,22 mm.

10. Matériau composite selon l'une des revendications 1 à 9, **caractérisé**
- **en ce que** des agents de réticulation sont contenus dans la couche supérieure (4), dans la couche intermédiaire (5) et dans la couche de liaison (7) et les couches sont réticulées et/ou la couche intermédiaire (5) est réticulée de manière croisée avec la couche de liaison (7) par assemblage à l'état encore humide et/ou
- **en ce que** jusqu'à 4% en poids de microbilles creuses transparentes en plastique sont contenues dans la couche supérieure (4) et/ou dans la couche intermédiaire (5) et/ou
- **en ce que** des matières solides sous forme de colorants, d'agents de réticulation et/ou d'épaississants sont contenues dans les dispersions de polyuréthane et/ou
- **en ce que** des tubes capillaires, notamment traversants jusqu'aux alvéoles ouvertes de la mousse pelée ou fendue, sont conçus dans la couche supérieure (4) et/ou dans la couche intermédiaire (5).

11. Matériau composite selon l'une des revendications 1 à 10, **caractérisé**
- **en ce que** la couche supérieure (4) a une épaisseur de 0,04 à 0,14 mm, de préférence de 0,08 à 0,11 mm, et/ou
- **en ce que** la couche intermédiaire (5) a une épaisseur de 0,04 à 0,11 mm, de préférence de 0,06 à 0,08 mm, et/ou
- **en ce que** la couche supérieure (4) contient entre 55 et 95% en poids, de préférence entre 65 et 85% en poids, d'une dispersion de polyuréthane solidifiée réticulée et a le cas échéant une densité comprise entre 0,9 et 1,12 g/cm³.

12. Matériau composite selon l'une des revendications 3 à 11, **caractérisé en ce que**, lors de l'utilisation de mousses de polyuréthane ayant un poids de 15 à 45 kg/m³ comme couche de support (2), un treillis ou tricot ou non-tissé (3) est intégré dans la couche intermédiaire (5) ou dans la couche de liaison (7) et/ou est lié à la couche de support (2), de préférence par contrecollage à la flamme.

13. Matériau composite selon l'une des revendications 1 à 12, **caractérisé en ce que** la couche de support (2) est un élastomère non thermoplastique et/ou **en ce qu'**une couche de dispersion de polyuréthane réticulée qui a une profondeur de pénétration de 0,02 à 1,0 mm est intégrée dans celle des zones de surface (10) de la couche de support (2) qui est proche de la couche supérieure (4) et **en ce que** la dispersion de polyuréthane de la couche intermédiaire (5) ou de la couche de liaison (7) est introduite de manière contrôlée dans cette zone de surface renforcée (10) de la couche de support (2).

14. Matériau composite selon la revendication 13, **caractérisé en ce que** les zones de la couche de support (2) dans lesquelles la dispersion de polyuréthane est intégrée et la couche adhésive est introduite de manière contrôlée ont une densité qui est supérieure de 30 à 95%, de préférence de 30 à 80%, à la densité des zones (11) sans couche adhésive de la couche de support (2).

15. Matériau composite selon l'une des revendications 1 à 13, **caractérisé en ce que** la couche supérieure (4) est une couche élastomère avec une structure réticulée ramifiée qui a de préférence une dureté Shore A de 45 à 78 et/ou a une proportion de polysiloxane de 2 à 12% en poids et/ou **en ce que** la couche de liaison (7) et/ou la couche intermédiaire (5) éventuellement présente ont des propriétés élastomères et/ou **en ce que** la couche de polyuréthane réticulée de la couche intermédiaire (5) et/ou la couche de liaison (7) contiennent entre 25 et 55% en poids de polyacrylate et/ou ont une dureté Shore A de 22 à 50.

16. Matériau composite selon l'une des revendications 1 à 15, **caractérisé en ce que** la couche supérieure (4) conçue sur un substrat structuré en négatif, de préférence sur une plaque de caoutchouc de silicone ou aussi sur une bande de caoutchouc de silicone ou sur un papier à séparer, a l'aspect de la soie, d'un tissu en fibres de carbone, un aspect technique avec des creux qui ont une forme triangulaire, carrée, rectangulaire ou ronde, une profondeur entre 0,002 et 0,001 mm et des distances entre eux de 0,001 à 0,005 mm ou **en ce que** les structures dessinées en négatif sont conçues avec un laser et/ou **en ce que** la surface a l'aspect d'un cuir fleur.

17. Objets fabriqués avec un matériau composite (1) selon l'une des revendications 1 à 16, sous la forme d'habillages de paroi intérieure de véhicule automobile, d'habillages de plafond d'automobile, d'habillages de coffre, d'habillages de portières et de dossiers et d'appui-têtes pour des véhicules automobiles, de sacs, de pièces de tiges et de doublures pour des chaussures et des chaussures de sport.

18. Procédé de fabrication d'un matériau composite selon l'une des revendications 1 à 17, **caractérisé en ce que**, sur une matrice chauffée ou chaude, à surface structurée, qui a par exemple la forme d'un habillage de plafond d'automobile, on applique la couche supérieure (4) - basée sur une dispersion de polyuréthane aqueuse -,
- **en ce que**, sur cette couche supérieure (4), on applique après son début de séchage ou après son séchage la couche intermédiaire (5),
- **en ce que**, sur la couche intermédiaire (5) encore humide, on applique soit directement la couche de support (2) soit la couche de support (2) munie de la couche de liaison (7), d'une couche constituée d'un treillis ou tricot ou non-tissé (3) et intégrée dans la couche de liaison (7) ou liée sur la couche de support (2) soit sans une couche de support de ce type, la couche intermédiaire (5) ou la couche de liaison (7) se trouvant à chaque fois encore à l'état humide, et
- **en ce que** les couches (4, 5, 7, 3, 2) ainsi superposées sont assemblées en un matériau composite (1) en forme de plaque ou de bande en les pressant les unes contre les autres.

19. Procédé selon la revendication 18, **caractérisé en ce que** l'on applique la couche intermédiaire (5) ou la couche de liaison (7) sur la surface, liée le cas échéant à un treillis ou tricot (3), de la couche de support (2) et on introduit le matériau adhésif en polyuréthane de la couche intermédiaire (5) ou de la couche de liaison (7) seulement dans une zone partielle (7'), proche de la surface, de la mousse de polyuréthane à alvéoles ouvertes formant la couche de support (2).
